# EUROPÄISCHE PATENTSCHRIFT

(11) **EP 1 240 980 B1**
(45) Veröffentlichungstag und Bekanntmachung des Hinweises auf die Patenterteilung: **22.10.2008**
(21) Anmeldenummer: 02100267.0
(22) Anmeldetag: 15.03.2002
(51) Int. Cl.: B25B 27/00, F16J 15/32

(54) **Transportschutz- und Montagering für Wellendichtringe**
Transport safety and mounting ring for shaft seals
Anneau de protection pendant le transport et pour le montage de joints d'étanchéité

(30) Priorität: 16.03.2001 EP 01106626
(43) Veröffentlichungstag der Anmeldung: 18.09.2002
(73) Patentinhaber: Ford Global Technologies, LLC, Dearborn, MI 48126 (US)
(72) Erfinder: Beckers, Anno Hermann, 50667, Köln (DE)
(74) Vertreter: Drömer, Hans-Carsten

(56) Entgegenhaltungen:
- EP-A- 0 272 775
- DE-A- 19 527 042
- DE-C- 4 141 320
- DE-U- 29 719 546
- US-A- 4 815 884

## Beschreibung

Die Erfindung bezieht sich auf einen Transportschutz- und Montagering für Wellendichtringe der im Oberbegriff des Patentanspruchs 1 erläuterten Art.

Das Problem des Transportschutz- und Montageringes soll anhand der Getriebemontage und des Getriebeeinbaues für Kraftfahrzeuge erläutert werden. Die Anwendung des Montageringes beschränkt sich natürlich nicht auf dieses Beispiel, sondern der Montagering kann überall dort eingesetzt werden, wo ein entsprechender Montageablauf von Wellen und Wellendichtringen an beliebigen Maschinen vorliegt.

Kraftfahrzeuggetriebe werden fertig vormontiert und dann über eine bestimmte Strecke zum Einbau ins Fahrzeug oder in die Antriebseinheit transportiert. Dabei werden z. B. die Achsantriebswellen erst beim Einbau des Getriebes in die Antriebseinheit mit dem Getriebe verbunden, indem die einzelne Achsantriebwelle durch einen Wellendichtring in das Getriebegehäuse eingeführt wird. Wellendichtringe weisen eine sehr empfindliche Dichtlippe auf; sowohl beim Transport des Getriebes als auch beim Einführen der Achsantriebswelle mit seinem scharfkantigen Keilwellenprofil ist die Dichtlippe der Gefahr der Beschädigung ausgesetzt. Zudem muß die Öffnung des Getriebes während des Transportes durch einen geeigneten Stopfen verschlossen sein, um sowohl den Austritt von Getriebeöl als auch den Eintritt von Schmutz ins Getriebe zu verhindern.

Aus der DE 41 41 320 C1 ist ein Transport- und Montagering für Wellendichtringe bekannt, bei dem ein die Dichtlippe des Wellendichtringes aufnehmendes Ringteil mit einem Radialflansch vorgesehen ist, das während der Montage der Welle durch den Wellendichtring die empfindliche Dichtlippe schützt.

Dieser Transport- und Montagering für Wellendichtringe weist den Nachteil auf, daß er nur in Einbausituationen angewendet werden kann, bei denen ein nachträgliches axiales Entfernen des Transport- und Montageringes möglich ist, d. h. bei einer von außen in das Getriebegehäuse eingeführte Welle kann der Montagering nicht mehr entfernt werden. Weiterhin wird für den Transport des Getriebes ein zusätzlicher Stopfen benötigt, um die Öffnung im Getriebegehäuse zu schließen.

Dokument EP-A-0 272 775 offenbart einen Transport- und Montageringes gemäß des Oberbegriffs von Anspruch 1.

Die Aufgabe der Erfindung ist es deshalb, einen Montagering für Wellendichtringe zu schaffen, der neben der Montagehilfe gleichzeitig die Wellenöffnung während des Transportes abdichtet, so daß kein separater Transportstopfen benötigt wird.

Gemäß der Erfindung wird diese Aufgabe gelöst, indem eine Montagering für Wellendichtringe der im Oberbegriff des Patentanspruchs 1 erläuterten Art die im Kennzeichenteil des Patentanspruchs 1 aufgezeigten Merkmale aufweist.

Indem die Öffnung des Ringteiles durch einen Sollbruchstellen aufweisenden Verschlußboden verschlossen ist, erfüllt der Montagering auch die Aufgabe des Transportstopfens. Trotz der Sollbruchstellen verschließt der Verschlußboden die Öffnung im Ringteil flüssigkeitsdicht ab, so daß der Montagering bereits vor dem Transport in die Öffnung des Wellendichtringes eingebracht werden kann. Zur Montage der Welle nach dem Transport verbleibt der Montagering in der Öffnung im Wellendichtring. Der Verschlußboden wird durch die eindringende Welle an den Sollbruchstellen getrennt, so daß die Welle durch den Montagering geschoben werden kann. Der Verschlußbodens selbst kann dabei eben sein oder beliebig anders geformt sein. Wichtig ist hierbei nur, daß beim Einführen der Welle der Verschlußboden an den Sollbruchstelle aufbricht.

Vorteilhaft weist der Verschlußboden eine Überhöhung auf, wodurch das Aufsprengen des Verschlußbodens an den Sollbruchstellen gegenüber einem ebenen Verschlussboden während des Einführens der Welle erleichtert wird. Die Form des Verschlußbodens mit der Überhöhung kann dabei jede beliebige nicht-ebene Form annehmen, wobei der Verschlußboden bevorzugt, ballig, kegelförmig oder pyramidenförmig ausgeführt ist.

Bei einer bevorzugten Ausführung weist die Überhöhung des nicht-ebenen Verschlußbodens in die Richtung, aus der eine Welle in den Montagering eingeführt wird. Wird die in dem Montagering einzuführende Welle auf den Verschlußboden gedrückt, führt dies zu einer Abflachung der Überhöhung. Mit zunehmender Abflachung steigen die Membrankräfte in den Sollbruchstellen überproportional gegenüber der aufzuwendenden Druckkraft der Welle auf den Verschlußboden an, so daß mit geringem Kraftaufwand auf den Verschlußboden das Aufbrechen der Sollbruchstellen bewirkt wird.

Bevorzugt verbleibt oder verbleiben der Verschlußboden bzw. die Splitter des Verschlußbodens am Ringteil, indem zwischen Verschlußboden und Ringteil entsprechende Scharnierfunktionen - im Unterschied zu den Sollbruchstellen- eingebracht sind.

Eine weitere vorteilhafte Ausgestaltung der Erfindung sieht vor, daß der Verschlußboden bei der Montage sich vollständig vom Ringteil trennt. Der Verschlußboden verbleibt dann in der Getriebe oder wird durch entsprechende weitere Montagöffnungen entfernt. Ist der Verschlußboden für den Verbleib in der Getriebe bestimmt, besteht er vorzugsweise aus einem sich unter den Betriebsbedingungen der Getriebe selbstauflösendem Material. In diesem Fall, wie auch bei allen anderen hier besprochenen Ausführungen, können die Einzelteile des Montagerings aus verschiedenen Materialen bestehen.

Bevorzugt ist der Verschlußboden an der dem Radialflansch gegenüberliegenden Seite des Ringteiles angeordnet. Dadurch kann die Welle nach Durchstoßen des Verschlußbodens ungehindert durch das Ringteil geschoben werden und kann nicht durch die Splitter des Verschlußbodens im Ringteil sich verklemmen.

Vorteilhaft ist weiterhin, wenn die Sollbruchstellen, von der Mitte des Verschlußbodens ausgehend, strahlenförmig, nach außen in Richtung des Ringteiles weisend, verlaufen. Dadurch platzt der Verschlußboden gleichmäßig an den Sollbruchstellen auf und bildet mehrere gleichgroße, tortenstückförmige Splitter, die, da die Splitter biegeweich mit dem Ringteil verbunden sind, alle gleichförmig von der eindringenden Welle radial nach außen gedrückt werden.

In einer weiteren vorteilhaften Ausführung der Erfindung weist zumindest ein durch die Sollbruchstellen gebildeter Splitter des Verschlußbodens eine geradlinige Scharniernut auf Die Sollbruchstellen sind dabei so geformt, das bei vollständigem Aufbrechen der Sollbruchstellen der entstandene Splitter mittels einer geradlinigen Scharniernut am Montagering hängt. Dabei ist unerheblich, wo genau der Verschlußboden am Montagring angeordnet ist. Wesentliche Funktion der geradlinigen Scharniernut ist es, daß der Splitter beim Einführen der Welle mit geringem Kraftaufwand gegenüber dem Montagring umgebogen werden kann.

Eine weitere bevorzugte Ausführung sieht vor, daß das Ringteil und der Radialflansch durch einen axial und radial verlaufenden Schlitz aufgetrennt sind. Dabei kann dieser Schlitz selbst auch als Sollbruchstelle ausgeführt sein, d. h. während der Montage ist der Schlitz dicht und wird erst später beim Entfernen des Montageringes von der Welle aufgebrochen.

Vorteilhafterweise ist der Radialflansch mit zumindest zwei Kerbausschnitten versehen und weist an seiner dem Schlitz gegenüberliegenden Bereich einen Handgriff auf, so daß der Montagering auf der Welle leicht geöffnet und aus dem Wellendichtring herausgezogen werden kann. Damit kann bei eingesetzt bleibendem Montagering die Welle mit ihrem kerbverzahnten Ende leicht und sicher eingeführt werden, ohne daß eine Verletzung der empfindlichen Dichtlippe des Wellendichtringes befürchtet werden muß. Darauf folgend kann dann durch zunächst axialen Zug und dann durch radialen Zug am Handgriff der Montagering radial zur Antriebswelle abgezogen werden, wobei bei radialem Zug der Montagering sich an seinem Schlitz öffnet und an den Kerbausschnitten aufbiegt.

Vorteilhafterweise liegen dabei Sollbruchstellen in der Verlängerung sowohl der Kerbausschnitte und/oder dem Schlitz im Ringteil, wodurch das Öffnen des Schlitzes und das Umbiegen des Ringteiles an den Kerbausschnitten erleichtert wird.

In einer weiteren vorteilhaften Ausführung ist auf der dem Ringteil gegenüberliegenden Seite des Radialflansches eine Verschlußhülse angeordnet ist, die den Verschlußboden aufnimmt. Die Verschlußhülse ermöglicht es, den Verschlußboden in einer bestimmten Entfernung vom Ringteil anzuordnen. Dieser Abstand bewirkt, daß die Splitter des Verschlußbodens, die beim Einführen der Welle entstehen, nicht bis zum Ringteil reichen. Dadurch sind die Splitter nicht im Weg wenn die Welle durch den Montagering im Bereich des Wellendichtringes geschoben wird.

In einer weiteren bevorzugten Ausführung weist die Verschlußhülse längs verlaufende Sollbruchstellen auf. In diesem Fall bricht beim Einführen der Welle nicht nur der Verschlußboden auf, sondern auch die Verschlußhülse. Sinnvollerweise liegen dabei die Sollbruchstellen von Verschlußboden und Verschlußhülse in einer Linie. Bevorzugt kann dies angewendet werden, wenn die Überhöhung des nichtebenen Verschlußbodens in Richtung der einzuführenden Welle zeigt. Wird durch die Welle Druck auf den Verschlußboden ausgeübt, bricht dies bei geringem Kraftaufwand gleichzeitig Verschlußboden und Verschlußhülse auf.

In einer weiteren Ausführung ist die Verschlußhülse mit dem Ringteil über Scharniernuten und mit dem Verschlußboden über Scharniernuten verbunden. Dies erlaubt beim Einführen der Welle, die aufgebrochenen Splitter von Verschlußboden und Verschlußhülse mit wenig Kraft zur Seite zu drücken. Bevorzugt sind auch hier die Scharniernuten der einzelnen Splitter geradlinig ausgeführt. Damit auch die Splitter der Verschlußhülse eben sind, ist die Verschlußhülse bevorzugt vieleckig ausgeführt, wobei die Sollbruchstellen der Verschlußhülse die Ecken bilden.

Die Erfindung wird anhand eines in den Figuren gezeigten Ausführungsbeispiels näher erläutert, es zeigen:
- Fig. 1: eine Seitenansicht des Montageringes;
- Fig. 2: eine Draufsicht des Montageringes;
- Fig. 3: eine Seitenansicht des Montageringes mit eingeführter Welle;
- Fig.4: eine Seitenansicht des Montageringes mit Verschlußboden am Radialflansch;
- Fig. 5: eine Seitenansicht des Montageringes mit nach außen verlängertem Radialteil;
- Fig. 6: eine Seitenansicht des Montagringes mit nach außen weisender Verschlußhülse;
- Fig. 7: eine Detailansicht des Übergangs von Radialteil zum Verschlußboden;
- Fig. 8: eine Detailansicht des Verschlußbodens;
- Fig. 9: eine perspektivische Ansicht eines Montageringes; und
- Fig. 10: eine Seitenansicht eines Montageringes mit vieleckiger Verschlußhülse und nach außen weisender Überhöhung des Verschlußbodens.

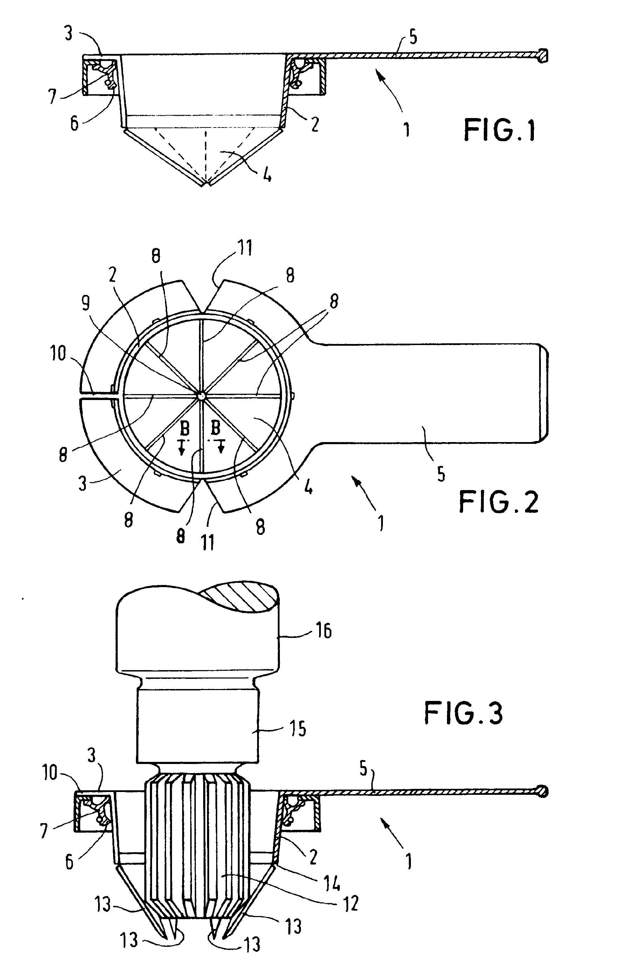

Figur 1 zeigt in der Seitenansicht den Montagering 1 als einstückig ausgebildetes Kunststoffformteil, das im wesentlichen aus einem Ringteil 2, einem Radialflansch 3, dem kegelförmigen Verschlußboden 4 und einem Handgriff 5 besteht. Das Ringteil 2 ist in bekannter Weise leicht konisch ausgebildet und nimmt an seinem Außenumfang die Dichtlippe 6 des Wellendichtringes 7 in gleichfalls bekannter Weise auf. Der Wellendichtring 7 kann hierbei soweit auf das Ringteil aufgeschoben werden, daß er mit seinem Mantelgehäuse am Radialflansch 3 zur Anlage kommt, wodurch der Wellendichtring 7 zusammen mit dem Montagering 1 in die Aufnahmeöffnung im Getriebegehäuse eingepreßt werden kann.

In Figur 2 ist der Montagering 1 in der Draufsicht (Ansicht vom Inneren des Getriebegehäuses) dargestellt. Im Verschlußboden 4 verlaufen die Sollbruchstellen 8 regelmäßig und strahlenförmig nach außen. Zur besseren Rißausbreitung ist in der Mitte des Verschlußbodens 4 eine kleine Anrißöffnung 9 vorgesehen. Das Ringteil 2 ist gegenüber dem Handgriff 5 am Schlitz 10 aufgetrennt, wobei sich der Schlitz auch durch den Radialflansch 3 hinzieht. Zwischen Schlitz 10 und Handgriff 5 weist der Radialflansch 3 zwei Kerbausschnitte 11 auf, die ein Aufbiegen des Ringteiles 2 erleichtern.

In Figur 3 ist die Montage einer Welle mit einem Keilwellenprofil 12 durch den Montagering 1 gezeigt. Die Welle durchstößt den Verschlußboden 4, worauf der Verschlußboden 4 in einzelne Splitter 13 zerfällt. Durch die biegeweiche Anbindung 14 des Verschlußbodens 4 an das Ringteil 2 biegen sich die Splitter 13 nach innen ins Getriebegehäuse und setzen somit der Welle beim weiteren Einführen keinen Widerstand entgegen. Zusätzlich erleichtert wird die Montage durch den Schlitz 10 im Ringteil. Verkantet sich die Welle, weitet sich das Ringteil 2 leicht auf und ein Verklemmen der Welle im Ringteil 2 wird vermieden. Durch das Ringteil 2 ist die empfindliche Dichtlippe 6 vor unbeabsichtigten Beschädigungen durch das scharfkantige Keilwellenprofil 12 der Welle geschützt.

Ist die Welle soweit in das Getriebegehäuse eingeschoben, daß das scharfkantige Keilwellenprofil 12 den Wellendichtring passiert hat, und befindet sich der glatte Zylinderabsatz 15 der Welle im Bereich des Dichtringes 7, so kann der komplette Montagering am Handgriff 5 vorsichtig aus der Öffnung des Wellendichtringes 7 in Richtung des Radialflansches 3 gezogen werden. Außerhalb des Wellendichtringes 7, auf der Welle befindlich, kann aufgrund des Schlitzes 10 und der Kerbausschnitte 11 der Montagring 2 aufgebogen und dann von der Welle entfernt werden. Zum Schluß wird die Welle in die Endposition im Getriebegehäuse gebracht, wobei dann die glatte Dichtfläche 16, die mit der Dichtlippe 6 zusammenwirkt, im Bereich des Wellendichtringes 7 angeordnet ist.

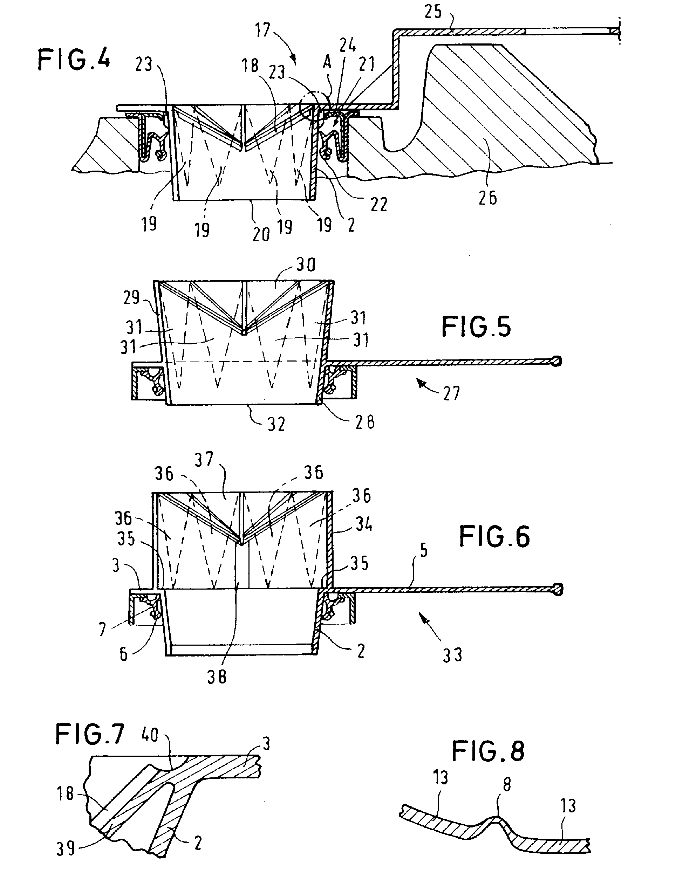

Bei einer weiteren Ausführung des Montageringes 17 in Figur 4 ist der Verschlußboden 18 am Radialflansch 3 befestigt. Die Länge des Ringteiles 2 ist dabei so bemessen, daß wenn eine Welle den Verschlußboden 18 durchdringt, die Splitter 19 des Verschlußbodens 18 nicht über den unteren Rand 20 des Ringteiles 2 reichen. Wesentlicher Vorteil ist, daß beim Herausziehen des Montageringes 17 aus dem Wellendichtring 21 die Dichtlippe 22 nicht mit den scharfkantigen Splittern 19 in Berührung kommt.

Bei dieser Ausführung des Montageringes 17 wird die für den Transport notwendige Klemmkraft zwischen Montagering 17 und Wellendichtring 21 durch Klemmbutzen 23 erreicht, die sich im Metallring 24 des Wellendichtringes 21 festklemmen. Weiterhin ist der Handgriff 25 gekröpft, um sich der Form des Getriebegehäuses 26 anzupassen.

Bei dem in Figur 5 dargestellten Montagering 27 weist das Ringteil 28 die nach - getriebeseitig gesehen - außen weisende Verlängerung 29 auf, wobei sich der Verschlußboden 30 am - vom Getriebe aus gesehen - äußeren Ende des Montageringes 27 befindet. Auch hier ist die Gesamtlänge von Ringteil 28 und Verlängerung 29 so gewählt, daß die Splitter 31 des Verschlußbodens 30 nicht über den unteren Rand 32 des Ringteils 28 hinausragen.

Figur 6 zeigt einen Montagering 33 mit einer Verschlußhülse 34, die gegenüber dem Ringteil 2 einen Absatz 35 aufweist. Die Länge der Verschlußhülse 34 über dem Absatz 35, wobei dieser nicht mit dem Flanschteil 3 übereinstimmen muß, ist so gewählt, daß die Splitter 36 des Verschlußbodens 37 nicht über die Kontur des Ringteiles hinausragen. Gegenüber der Ausführung in Figur 3 und Figur 4 können dadurch Wellen eingeführt werden, die nach dem Keilwellenprofil 12 keinen Zylinderabsatz 15 mit geringerem Durchmesser als der Wellendichtring aufweisen, sondern bei denen sich direkt an das Keilwellenprofil die Dichtfläche 16 mit dem Durchmesser des Wellendichtringes anschließt. Um beim Abnehmen des Montageringes 33 von der Welle das Aufbiegen des Ringteiles 2 und der Verschlußhülse 34 zu ermöglichen, ist ähnlich den Kerbausschnitten 11 im Radialflansch 3 an der entsprechenden Stelle der Verschlußhülse 34 ein Scharnierstelle 38 vorgesehen.

In Figur 7 ist eine Detailansicht des Ausschnittes A aus Figur 4 am Übergang von Radialflansch 3 zum Ringteil 2 gezeigt. Der Verschlußboden 18 weist die regelmäßig angeordneten Sollbruchstellen 39 auf, die eine geringere Dicke als der übrige Verschlußboden 18 aufweisen. Am Übergang von Verschlußboden 18 zum Ringteil 2 ist die Materialdicke in einer umlaufenden Scharniernut 40 ebenfalls reduziert, allerdings mit der Funktion, daß die Splitter des Verschlußbodens 18 um diese Scharniernut biegen.

Einen weitere Detailansicht zeigt Figur 8 mit dem Schnitt B aus Figur 2. Damit die beim Aufbrechen des Verschlußbodens entstehenden scharfkantigen Splitter 13 beim Herausziehen des Montageringes 1 nicht die Dichtlippe 6 des Wellendichtringes 7 beschädigen, sind die Sollbruchstellen 8 in der nach radial innen weisenden Richtung ausgewölbt, so daß die resultierenden Bruchnähte auf keinen Fall radial nach außen in Richtung der Dichtlippe 7 zeigen.

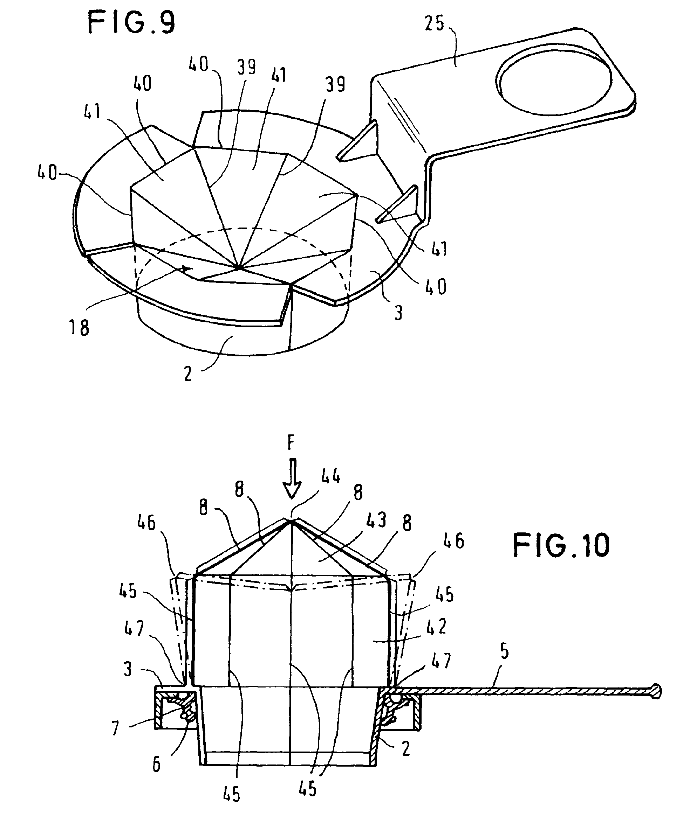

Figur 9 zeigt eine perspektivische Ansicht des Montageringes aus Figur 4. Durch die geradlinigen Scharniernuten 40 und die Sollbruchstellen 39 werden die ebenen Splitter 41 des Verschlußbodens 18 gebildet.

Eine Seitenansicht eines Montageringes mit vieleckiger Verschlußhülse 42 und nach außen weisender Überhöhung des Verschlußbodens 43 zeigt Figur 10. Sobald eine nicht dargestellte Welle mit der Kraft F auf die Spitze 44 des Verschlußbodens 43 drückt, verschiebt sich die Spitze 44 in Kraftrichtung, die Überhöhung des Verschlußbodens 43 verringert sich damit. Die im Verschlußboden wirkenden Membrankräfte, die der Kraft F entgegenwirken, erhöhen sich überproportional gegenüber der Kraft F. Dies ist bedingt durch die nichtlinearen Zusammenhang zwischen Membrankräften und Kraft F, der aus der sich verringernden Überhöhung des Verschlußbodens 43 und der damit geringeren Stützwirkung, die der flachere Verschlußboden 43 aufbringen kann, resultiert.

Die hohen Membrankräfte im Verschlußboden führen dazu, daß an den Sollbruchstellen 8 des Verschlußbodens 43 sehr schnell die zulässigen Bruchspannungen des Materials überschritten werden, so daß die Sollbruchstellen 8 aufbrechen. Da jede Sollbruchstelle 8 direkt weitergeführt ist in eine Sollbruchstelle 45 der Verschlußhülse 42, führt dies auch zum Aufbrechen der Sollbruchstellen 45, so daß die mehreckige Verschlußhülse 42 in mehrere ebene Splitter zerfällt. Jeder Splitter ist über eine obere Scharniernut 46 biegeweich mit einem Splitter des Verschlußbodens 43 und mit einer unteren Scharniernut 47 mit dem Radialflansch 3 verbunden. Sobald die Sollbruchstellen 8 und 45 aufgebrochen sind, läßt sich die Spitze 44 des Verschlußbodens 43 aufgrund der biegeweichen Anbindungen der Splitter sehr leicht in Richtung des Ringteils 2 verschieben, wodurch das Einführen einer Welle in den Montagering sehr einfach ist.

Es versteht sich von selbst, daß die Lage des Verschlußbodens nicht auf die gezeigten Ausführungen beschränkt ist, vielmehr kann der Verschlußboden an jeder Stelle des Ringteiles oder der Verschlußhülse angeordnet sein. Weiterhin kann bei allen erfindungsgemäßen Ausführungen das Ringteil und Verschlußhülse sowohl konisch als auch zylindrisch ausgestaltet sein, wobei die Verschlußhülse dabei rund oder vieleckig sein kann.

## Patentansprüche

1. Transportschutz- und Montagering (1) für Wellendichtringe (7), mit einem Ringteil (2) und einem angeformten Radialflansch (3), wobei das Ringteil (2) die Dichtlippe (6) des Wellendichtringes (7) aufnimmt und am Radialflansch (3) das Mantelteil des Wellendichtringes (7) zur Anlage kommt,
**dadurch gekennzeichnet, daß**
die Öffnung des Ringteiles (2) durch einen Sollbruchstellen (8) aufweisenden Verschlußboden (4) verschlossen ist.

2. Transportschutz- und Montagering nach Anspruch 1,
**dadurch gekennzeichnet, daß**
der Verschlußboden (4) eine Überhöhung aufweist.

3. Transportschutz- und Montagering nach Anspruch 1 oder 2,
**dadurch gekennzeichnet, daß**
die Überhöhung des Verschlußbodens (4) in die Richtung weist, aus der eine Welle in den Montagering (1) eingeführt wird.

4. Transportschutz- und Montagering nach einem der Ansprüche 1 bis 3,
**dadurch gekennzeichnet, daß**
der Verschlußboden (4) bzw. Splitter (13, 19) des Verschlußbodens (4) nach dem Einführen einer Welle (12) in den Montagering (1) am Ringteil (2) verbleiben.

5. Transportschutz- und Montagering nach einem der vorherigen Ansprüche,
**dadurch gekennzeichnet, daß**
der Verschlussboden (4) Sollbruchstellen (8) aufweist, die von der Mitte des Verschlußbodens (4) ausgehend, strahlenförmig nach außen in Richtung des Ringteiles (2) weisend, verlaufen.

6. Tranportschutz- und Montagering nach einem der vorherigen Ansprüche,
**dadurch gekennzeichnet, daß**
zumindest ein durch die Sollbruchstellen (8) gebildeter Splitter (13, 19) des Verschlußbodens (4) eine geradlinige Scharniernut (40, 46) aufweist.

7. Tranportschutz- und Montagering nach einem der Ansprüche 1 bis 4,
**dadurch gekennzeichnet, daß**
der Verschlußboden (4) bzw. Splitter (13) des Verschlußbodens (4) nach dem Einführen einer Welle (13) sich vollständig vom Ringteil (2) trennt bzw. trennen.

8. Tranportschutz- und Montagering nach Anspruch 7,
**dadurch gekennzeichnet, daß**
der vom Ringteil (2) getrennte Verschlußboden (4) im Gehäuse verbleibt, wobei der Verschlußboden (4) aus einem sich unter Betriebsbedingungen eines Getriebes selbstauflösendem Material besteht.

9. Tranportschutz- und Montagering nach einem der vorherigen Ansprüche
**dadurch gekennzeichnet, daß**
das Ringteil (2) durch einen axial und der Radialflansch (3) durch einen radial verlaufenden Schlitz (10) aufgetrennt sind.

10. Tranportschutz- und Montagering nach Anspruch 8,
**dadurch gekennzeichnet, daß**
der Schlitz (10) als Sollbruchstelle (8) ausgeführt ist.

11. Tranportschutz- und Montagering nach einem der vorherigen Ansprüche
**dadurch gekennzeichnet, daß**
der Radialflansch (3) an zumindest einer Stelle mit einem Kerbausschnitt (11) versehen ist.

12. Transportschutz- und Montagering nach einem der vorherigen Ansprüche,
**dadurch gekennzeichnet, daß**
Sollbruchstellen (8) des Verschlußbodens (4) in der Verlängerung der Kerbausschnitte (11) und/oder dem Schlitz (10) im Ringteil (2) angeordnet sind.

13. Transportschutz- und Montagering nach einem der vorherigen Ansprüche,
**dadurch gekennzeichnet, daß**
auf der dem Ringteil (2) gegenüberliegenden Seite des Radialflansches (3) eine Verschlußhülse (34, 42) angeordnet ist, die den Verschlußboden (4, 43) aufnimmt.

14. Transportschutz- und Montagering nach einem der vorherigen Ansprüche,
**dadurch gekennzeichnet, daß**
die Verschlußhülse (42) längs verlaufende Sollbruchstellen (45) aufweist.

15. Transportschutz- und Montagering nach Anspruch 14,
**dadurch gekennzeichnet, daß**
die Verschlußhülse (42) mit dem Radialflansch (3) über Schamiernuten (47) und mit dem Verschlußboden (43) über Schamiernuten (46) verbunden ist.

16. Transportschutz- und Montagering einem der vorherigen Ansprüche,
**dadurch gekennzeichnet, daß**
der dem Schlitz (10) gegenüberliegende Teil des Radialflansches (3) mit einem verlängerten Handgriff (5, 25) versehen ist.

## Claims

1. Transport safety and mounting ring (1) for shaft seal rings (7), having a ring part (2) and an integrally formed radial flange (3), the ring part (2) receiving the sealing lip (6) of the shaft seal ring (7) and the cover part of the shaft seal ring (7) coming into contact with the radial flange (3), **characterized in that** the opening of the ring part (2) is closed by a closure base (4) which has predetermined break points (8).

2. Transport safety and mounting ring according to Claim 1, **characterized in that** the closure base (4) has a camber.

3. Transport safety and mounting ring according to Claim 1 or 2, **characterized in that** the camber of the closure base (4) points in the direction, from which a shaft is inserted into the mounting ring (1).

4. Transport safety and mounting ring according to one of Claims 1 to 3, **characterized in that** the closure base (4) or splinters (13, 19) of the closure base (4) remains/remain after a shaft (12) has been inserted into the mounting ring (1) on the ring part (2).

5. Transport safety and mounting ring according to one of the preceding claims, **characterized in that** the closure base (4) has predetermined break points (8) which extend such that they start from the centre of the closure base (4) and point radially outward in the direction of the ring part (2).

6. Transport safety and mounting ring according to one of the preceding claims, **characterized in that** at least one splinter (13, 19) of the closure base (4), which at least one splinter (13, 19) is formed by the predetermined break points (8), has a rectilinear hinge groove (40, 46).

7. Transport safety and mounting ring according to one of Claims 1 to 4, **characterized in that** the closure base (4) or splinters (13) of the closure base (4) is/are separated completely from the ring part (2) after a shaft (13) has been inserted.

8. Transport safety and mounting ring according to Claim 7, **characterized in that** the closure base (4) which is separated from the ring part (2) remains in the housing, the closure base (4) comprising a material which disintegrates under operating conditions of a gear mechanism.

9. Transport safety and mounting ring according to one of the preceding claims, **characterized in that** the ring part (2) is divided by an axially extending slot (10) and the radial flange (3) is divided by a radially extending slot (10).

10. Transport safety and mounting ring according to Claim 8, **characterized in that** the slot (10) is configured as a predetermined break point (8).

11. Transport safety and mounting ring according to one of the preceding claims, **characterized in that** the radial flange (3) is provided with a notch section (11) at least at one location.

12. Transport safety and mounting ring according to one of the preceding claims, **characterized in that** predetermined break points (8) of the closure base (4) are arranged in the extension of the notch sections (11) and/or the slot (10) in the ring part (2).

13. Transport safety and mounting ring according to one of the preceding claims, **characterized in that** a closure sleeve (34, 42) which receives the closure base (4, 43) is arranged on that side of the radial flange (3) which lies opposite the ring part (2).

14. Transport safety and mounting ring according to one of the preceding claims, **characterized in that** the closure sleeve (42) has longitudinally extending predetermined break points (45).

15. Transport safety and mounting ring according to Claim 14, **characterized in that** the closure sleeve (42) is connected to the radial flange (3) via hinge grooves (47) and to the closure base (43) via hinge grooves (46).

16. Transport safety and mounting ring according to one of the preceding claims, **characterized in that that** part of the radial flange (3) which lies opposite the slot (10) is provided with an extended handle (5, 25).

## Revendications

1. Anneau (1) de protection pendant le transport et pour le montage pour des joints d'étanchéité d'arbres (7), comprenant une partie d'anneau (2) et une bride radiale (3) moulée à celle-ci, la partie d'anneau (2) recevant la lèvre d'étanchéité (6) du joint d'étanchéité d'arbre (7) et la partie d'enveloppe du joint d'étanchéité d'arbre (7) venant en appui contre la bride radiale (3),
**caractérisé en ce que**
l'ouverture de la partie d'anneau (2) est fermée par un fond de fermeture (4) présentant des points destinés à la rupture (8).

2. Anneau (1) de protection pendant le transport et pour le montage selon la revendication 1,
**caractérisé en ce que**
le fond de fermeture (4) présente un rehaussement.

3. Anneau (1) de protection pendant le transport et pour le montage selon la revendication 1 ou 2,
**caractérisé en ce que**
le rehaussement du fond de fermeture (4) est tourné dans la direction depuis laquelle un arbre est introduit dans l'anneau de montage (1).

4. Anneau (1) de protection pendant le transport et pour le montage selon l'une quelconque des revendications 1 à 3,
**caractérisé en ce que**
le fond de fermeture (4) ou des fragments (13, 19) du fond de fermeture (4) subsistent sur la partie d'anneau (2) après l'introduction d'un arbre (12) dans l'anneau de montage (1).

5. Anneau (1) de protection pendant le transport et pour le montage selon l'une quelconque des revendications précédentes,
**caractérisé en ce que**
le fond de fermeture (4) présente des points destinés à la rupture (8), qui s'étendent en partant depuis le milieu du fond de fermeture (4), tournés en forme de rayons vers l'extérieur dans la direction de la partie d'anneau (2).

6. Anneau (1) de protection pendant le transport et pour le montage selon l'une quelconque des revendications précédentes,
**caractérisé en ce**
**qu'**au moins un fragment (13, 19) du fond de fermeture (4), formé par les points destinés à la rupture (8), présente une rainure de charnière rectiligne (40, 46).

7. Anneau (1) de protection pendant le transport et pour le montage selon l'une quelconque des revendications 1 à 4,
**caractérisé en ce que**
le fond de fermeture (4) ou des fragments (13) du fond de fermeture (4) se sépare ou se séparent complètement de la partie d'anneau (2) après l'introduction d'un arbre (13).

8. Anneau (1) de protection pendant le transport et pour le montage selon la revendication 7,
**caractérisé en ce que**
le fond de fermeture (4) séparé de la partie d'anneau (2) reste dans le boîtier, le fond de fermeture (4) se composant d'un matériau autodésintégrable dans les conditions de fonctionnement d'une transmission.

9. Anneau (1) de protection pendant le transport et pour le montage selon l'une quelconque des revendications précédentes,
**caractérisé en ce que**
la partie d'anneau (2) est séparée par une fente s'étendant axialement et la bride radiale (3) par une fente s'étendant radialement (10).

10. Anneau (1) de protection pendant le transport et pour le montage selon la revendication 8,
**caractérisé en ce que**
la fente (10) est réalisée sous forme de point destiné à la rupture (8).

11. Anneau (1) de protection pendant le transport et pour le montage selon l'une quelconque des revendications précédentes,
**caractérisé en ce que**
la bride radiale (3) est pourvue au moins en un endroit, d'une section d'encoche (11).

12. Anneau (1) de protection pendant le transport et pour le montage selon l'une quelconque des revendications précédentes,
**caractérisé en ce que**
des points destinés à la rupture (8) du fond de fermeture (4) sont disposés dans le prolongement des sections d'encoche (11) et/ou de la fente (10) dans la partie d'anneau (2).

13. Anneau (1) de protection pendant le transport et pour le montage selon l'une quelconque des revendications précédentes,
**caractérisé en ce que**
du côté de la bride radiale (3) opposé à la partie d'anneau (2) est disposée une douille de fermeture (34, 42) qui reçoit le fond de fermeture (4, 43).

14. Anneau (1) de protection pendant le transport et pour le montage selon l'une quelconque des revendications précédentes,
**caractérisé en ce que**
la douille de fermeture (42) présente des points destinés à la rupture (45) s'étendant longitudinalement.

15. Anneau (1) de protection pendant le transport et pour le montage selon la revendication 14,
**caractérisé en ce que**
la douille de fermeture (42) est connectée à la bride radiale (3) par le biais de rainures de charnière (47) et au fond de fermeture (4) par le biais de rainures de charnière (46).

16. Anneau (1) de protection pendant le transport et pour le montage selon l'une quelconque des revendications précédentes,
**caractérisé en ce que**
la partie de la bride radiale (3) opposée à la fente (10) est pourvue d'une poignée prolongée (5, 25).
